# EUROPÄISCHE PATENTANMELDUNG

(11) **EP 0 776 814 A1**
(43) Veröffentlichungstag der Anmeldung: **04.06.1997**
(21) Anmeldenummer: 96810730.0
(22) Anmeldetag: 01.11.1996
(51) Int. Cl.: B62D 7/18, B60G 7/00, B22D 19/00

(54) **Verfahren zur Herstellung eines Schwenklagers für eine Radaufhängung an einem Fahrzeug**

(30) Priorität: 28.11.1995 CH 3372/95
(71) Anmelder: Alusuisse Technology & Management AG, 8212 Neuhausen am Rheinfall (CH)
(72) Erfinder: Widrig, Jakob, 8400 Winterthur (CH)

(57) **Zusammenfassung**

Ein Schwenklager (10) aus Metall weist ein Lagerteil (12) zur Aufnahme eines Radlagers und einem vom Lagerteil (12) bogenförmig aufragenden Schwanenhals (14) auf und der Schwanenhals (14) umschliesst vom Lagerteil (12) ausgehend zumindest teilweise einen Hohlraum (18). Bei einem Verfahren zur Herstellung des Schwenklagers (16) in einer Giessform wird der lagerteilseitig offene Hohlraum (18) durch Umgiessen eines in eine Dauerform einführbaren und den Hohlraum (18) begrenzenden kreisbogenförmigen Zuges (30) erzeugt.

## Beschreibung

Die Erfindung betrifft ein Verfahren zur Herstellung eines für eine Radaufhängung an einem Fahrzeug vorgesehenen Schwenklagers aus Metall in einer Giessform, wobei das Schwenklager ein Lagerteil zur Aufnahme eines Radlagers und einen vom Lagerteil bogenförmig aufragenden Schwanenhals aufweist und der Schwanenhals vom Lagerteil ausgehend zumindest teilweise einen Hohlraum umschliesst. Im Rahmen der Erfindung liegen auch nach dem Verfahren hergestellte Schwenklager sowie deren Verwendung.

Schwenklager an Radaufhängungen von Kraftfahrzeugen sind einer stark wechselnden Belastung ausgesetzt. An die Festigkeit und die Steifigkeit einer Schwenklagerkonstruktion werden daher hohe Anforderungen gestellt. Gleichzeitig soll das Schwenklager ein möglichst geringes Eigengewicht aufweisen.

Ein bekanntes Schwenklager der vorstehend bezeichneten Art wird als Hohlkonstruktion aus Grauguss in einer Sandform gegossen. Die Ausbildung des Hohlraumes im Schwanenhals erfolgt durch Einlegung eines entsprechend dimensionierten Kernes in die Giessform. Ein wesentlicher Nachteil dieses Herstellverfahrens wird darin gesehen, dass für jedes Schwenklager eine neue Form sowie ein neuer Kern hergestellt werden muss, was sich letztlich in höheren Fertigungskosten niederschlägt.

Angesichts dieser Gegebenheiten hat sich der Erfinder die Aufgabe gestellt, ein Verfahren der eingangs genannten Art zu schaffen, mit dem sich ein Schwenklager mit hohlförmigem Schwanenhals kostengünstig in grosser Anzahl und unter Einhaltung enger Fertigungstoleranzen herstellen lässt.

Zur erfindungsgemässen Lösung der Aufgabe führt, dass der lagerteilseitig offene Hohlraum durch Umgiessen eines in eine Dauerform einführbaren und den Hohlraum begrenzenden kreisbogenförmigen Zuges erzeugt wird.

Die erfindungsgemässe Verwendung eines kreisbogenförmigen Zuges ermöglicht die Ausbildung eines Hohlraumes, der sich im Bedarfsfall über die gesamte Länge des Schwanenhalses erstreckt. Zudem kann die erfindungsgemässe Herstellung des Schwenklagers in einer Dauerform, d.h. in einer mehrfach verwendbaren Form erfolgen.

Mit dem erfindungsgemässen Verfahren lassen sich Schwenklager in grosser Anzahl kostengünstig und mit reproduzierbar hoher Massgenauigkeit herstellen. Gegenüber Alternativlösungen, bei denen das Schwenklager zweiteilig gegossen und anschliessend zusammengeschweisst wird, ergibt sich mit dem erfindungsgemäss hergestellten Schwenklager eine billigere und leichtere Ausführungsform mit vergleichsweise höherer Festigkeit. Die Verwendung eines beispielsweise aus Stahl gefertigten Zuges an Stelle von Sandkernen führt neben der kostengünstigeren Herstellung ebenfalls zu einer höheren Massgenauigkeit.

Als Giessverfahren zur Herstellung des erfindungsgemässen Schwenklagers eignet sich jedes Verfahren mit einer Dauerform, die das Ein- bzw. Ausführen eines kreisbogenförmigen Zuges ermöglicht. Zu den bevorzugten Giessverfahren gehören Druckguss-, Thixoforming-, Squeezecasting-, Vacural-, Kokillenguss- und Niederdruckgussverfahren. Mit einem entsprechend langen Zug wird es mit dem erfindungsgemässen Verfahren möglich, in einem Arbeitsschritt einen einzigen Hohlraum auszubilden, der sich im wesentlichen über die gesamte Länge des Schwanenhalses erstreckt.

Selbstverständlich ist es auch möglich, einen kürzeren Zug einzusetzen, so dass sich der Hohlraum beispielsweise nur über zwei Drittel der Länge des Schwanenhalses erstreckt und der an den Hohlraum anschliessende Teil des Schwanenhalses massiv ausgestaltet ist. Hierbei kann der massiv ausgestaltete Teil des Schwanenhalses zur Gewichtsreduktion an der Aussenseite Rippen aufweisen, die entsprechend angeordnete Ausnehmungen begrenzen.

Eine weitere Möglichkeit wird darin gesehen, dass der Schwanenhals einen vom lagerteilseitig offenen Hohlraum getrennten und an diesen anschliessenden, am freien Ende des Schwanenhalses offenen zweiten Hohlraum aufweist. Dieser zweite Hohlraum kann durch Einführung eines zweiten Zuges, der wegen seiner kürzeren Ausgestaltung statt kreisbogenförmig auch gerade sein kann, gebildet werden.

Als Werkstoff zum erfindungsgemässen Giessen des Schwenklagers eignen sich im Hinblick auf eine möglichst effektive Gewichtsreduktion insbesondere Aluminium- oder Magnesiumlegierungen.

Das Schwenklager eignet sich insbesondere für eine Radaufhängung an einem Personen- oder Lastkraftwagen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Seitenansicht eines Schwenklagers in Blickrichtung der Lagerteilachse;
- Fig. 2 einen Schnitt durch das Schwenklager von Fig. 1 gemäss der Linie I-I.

Ein Schwenklager 10 einer in der Zeichnung aus Gründen der besseren Uebersicht nicht wiedergegebenen Radaufhängung eines Fahrzeuges weist ein Lagerteil 12 für ein Radlager und einen vom Lagerteil 12 zur Bereitstellung eines Freiraumes 16 für Felge und Reifen eines Rades bogenförmig aufragenden Schwanenhals 14 auf. Der Schwanenhals 14 ist hohlförmig ausgestaltet und weist einen ersten Hohlraum 18 auf, der sich von einer lagerteilseitigen, im wesentlichen rechteckförmigen Oeffnung 20 mit sich kontinuierlich verjüngender Querschnittsöffnung in Richtung gegen das freie Ende des Schwanenhalses 16 erstreckt. In gleicher Weise erstreckt sich von einer Oeffnung 24 im Bereich des freien Endes des Schwanenhalses 16 ein zweiter Hohlraum 22 in Richtung des Lagerteils 12. Die beiden Hohlräume 18, 22, die allseitig von der Wand 28 des Schwanenhalses 16 begrenzt sind, sind durch eine Querwand 26 voneinander getrennt.

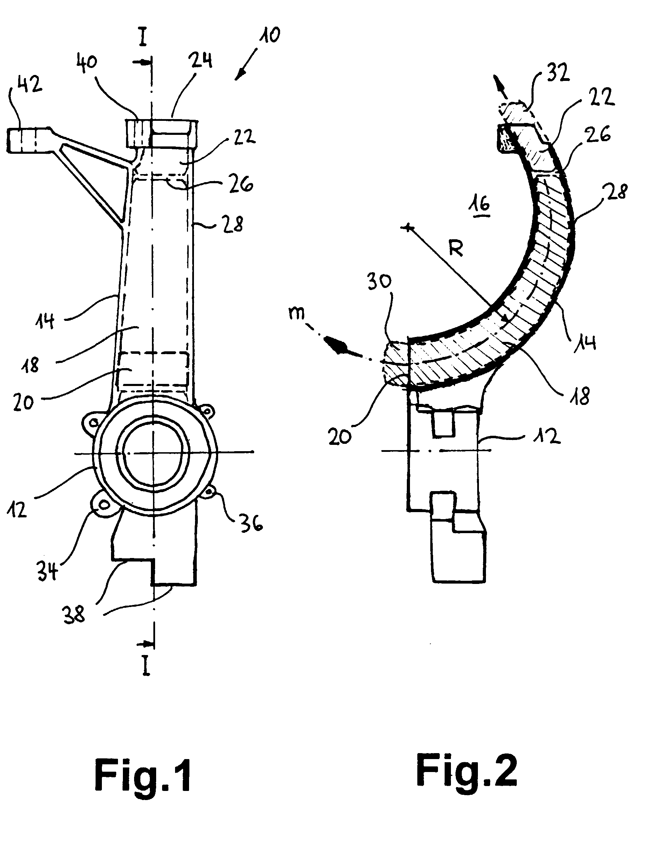

In Fig. 2 sind zwei Züge 30, 32 noch im Schwanenhals 16 des frisch gegossenen Schwenklagers 10 eingesetzt. Diese beiden Züge 30, 32, die üblicherweise aus Stahl gefertigt sind, begrenzen mit ihrer äusseren Umfangfläche die späteren Hohlräume 18, 22.

Der erste Zug 30 weist eine Mittelebene M auf, deren Radius R auf einem Kreisbogen liegt. Der Radius R des Kreisbogens definiert zugleich die Auszugsrichtung für den Zug 30. Der zweite, kleinere Zug 32 kann statt kreisbogenförmig auch gerade ausgebildet sein.

Am Schwenklager 10 sind weitere Elemente erkennbar, die innerhalb desselben Giessvorgangs angeformt werden. Vom Lagerteil 12 ragen auf der einen Seite Bremszangenbefestigungen 34, auf der anderen Seite Bremsschildbefestigungen 36 ab. Es sei hier noch angemerkt, dass selbstverständlich ein Bremsschild auch direkt am Lagerteil angegossen sein kann. Des weiteren ragen vom Lagerteil 12 Quer- bzw. Traglenkeranschlüsse 38 ab. Im Bereich des freien Endes des Schwanenhalses 14 sind Führungslenkeranschlüsse 40 sowie ein Lenkgestängeanschluss 42 angeformt.

Neben der in Fig. 1 und 2 gezeigten Ausführungsform kann sich der Hohlraum 18 praktisch über die gesamte Länge des Schwanenhalses 14 erstrecken, d.h. er umfasst auch den zweiten Hohlraum 22, wobei in diesem Fall die Querwand 26 wegfällt. Bei einer anderen Variante kann der Bereich des Schwanenhalses 14 anstelle des zweiten Hohlraumes 22 massiv ausgeführt sein, wobei zur Gewichtsreduktion an der Aussenseite des Schwanenhalses 14 in nicht dargestellter Weise Ausnehmungen mit diese begrenzenden Rippen vorgesehen sein können.

## Patentansprüche

1. Verfahren zur Herstellung eines für eine Radaufhängung an einem Fahrzeug vorgesehenen Schwenklagers (10) aus Metall in einer Giessform, wobei das Schwenklager (10) ein Lagerteil (12) zur Aufnahme eines Radlagers und einen vom Lagerteil (12) bogenförmig aufragenden Schwanenhals (14) aufweist und der Schwanenhals (14) vom Lagerteil (12) ausgehend zumindest teilweise einen Hohlraum (18) umschliesst,
dadurch gekennzeichnet,
dass der lagerteilseitig offene Hohlraum (18) durch Umgiessen eines in einer Dauer form einführbaren und den Hohlraum (18) begrenzenden kreisbogenförmigen Zuges (30) erzeugt wird.

2. Verfahren nach Anspruch 1, dadurch gekennzeichnet, dass das Schwenklager (10) im Druckguss-, Thixoforming-, Squeezecasting-, Vacural-, Kokillenguss- oder Niederdruckgussverfahren gegossen wird.

3. Schwenklager, hergestellt mit dem Verfahren nach Anspruch 1 oder 2, dadurch gekennzeichnet, dass der Hohlraum (18) sich im wesentlichen über die gesamte Länge des Schwanenhalses (14) erstreckt.

4. Schwenklager, hergestellt mit dem Verfahren nach Anspruch 1 oder 2, dadurch gekennzeichnet, dass der Schwanenhals (14) einen vom lagerteilseitig offenen Hohlraum (18) getrennten und an diesen anschliessenden, am freien Ende des Schwanenhalses (14) offenen zweiten Hohlraum (22) aufweist.

5. Schwenklager, hergestellt mit dem Verfahren nach Anspruch 1 oder 2, dadurch gekennzeichnet, dass der an den Hohlraum (18) anschliessende Teil des Schwanenhalses (14) massiv ausgestaltet ist.

6. Schwenklager nach Anspruch 5, dadurch gekennzeichnet, dass der massiv ausgestaltete Teil des Schwanenhalses (14) an dessen Aussenseite zwischen Rippen angeordnete Ausnehmungen aufweist.

7. Schwenklager nach einem der Ansprüche 3 bis 6, dadurch gekennzeichnet, dass es aus einer Aluminium- oder Magnesiumlegierung gegossen ist.

8. Verwendung eines Schwenklagers nach einem der Ansprüche 3 bis 7 für eine Radaufhängung an einem Personenoder Lastkraftwagen.
